Europäisches Patentamt

European Patent Office

Office européen des brevets

(19)

(11) Veröffentlichungsnummer: **0 315 922 B1**

# (12) EUROPÄISCHE PATENTSCHRIFT

(45) Veröffentlichungstag der Patentschrift:
31.07.91 Patentblatt 91/31

(51) Int. Cl.⁵: **F16D 1/06, F16D 3/40**

(21) Anmeldenummer: **88118482.4**

(22) Anmeldetag: **05.11.88**

(54) **Scheibenkupplung.**

(30) Priorität: **11.11.87 DE 3738210**

(43) Veröffentlichungstag der Anmeldung:
**17.05.89 Patentblatt 89/20**

(45) Bekanntmachung des Hinweises auf die
Patenterteilung:
**31.07.91 Patentblatt 91/31**

(84) Benannte Vertragsstaaten:
**BE DE ES FR GB IT NL SE**

(56) Entgegenhaltungen:
**DE-A- 3 210 389**
**DE-B- 1 223 200**
**DE-B- 1 284 701**
**DE-B- 2 812 783**
**FR-A- 2 334 004**
**FR-A- 2 426 831**
**GB-A- 2 189 868**

(73) Patentinhaber: **GKN CARDANTEC**
**INTERNATIONAL GESELLSCHAFT FUR**
**ANTRIEBSTECHNIK MBH**
**Westendhof 5**
**W-4300 Essen 1 (DE)**

(72) Erfinder: **Mangiavacchi, Jacques Gilbert**
**3, Avenue d'Aligre**
**F-78400 Chatou (FR)**

(74) Vertreter: **Harwardt, Günther, Dipl.-Ing. et al**
**HARWARDT NEUMANN PATENTANWÄLTE**
**Scheerengasse 2 Postfach 1455**
**W-5200 Siegburg 2 (DE)**

## Beschreibung

Die Erfindung betrifft eine Scheibenkupplung, insbesondere für Kreuzgelenkwellen für Kraftfahrzeuge, bestehend aus einem ersten und zweiten Kupplungsteil mit zwei radial sich erstreckenden Flanschen, die über Verzahnungen ihrer aneinanderanliegenden Kuppelflächen und über im Bereich der Verzahnungen angeordnete Verbindungsschrauben miteinander lösbar verbunden sind, wobei einer der Flansche mit Durchgangsbohrungen für die Verbindungsschrauben versehen ist.

Bei derartigen, aus der DE-A-2554574 und der dieser entsprechenden FR-A-2334004 bekannten Scheibenkupplung erfolgt die Drehmomentübertragung durch die Verzahnungen und die axiale Fixierung über die Schraubenverbindung. Die beiden Flansche sind jeweils mit Durchgangsbohrungen versehen, durch die die Verbindungsschrauben hindurchgeführt sind. Die Schrauben werden mit einer gewissen Vorspannung festgezogen, um ein Lösen in allen Betriebszuständen zu verhindern.

Von Nachteil bei dieser Ausbildung ist jedoch, daß zum Montieren der Verbindung zwei Werkzeuge erforderlich sind, d.h. es sind zwei Schlüssel anzusetzen, um die Verbindung wirksam zu erreichen. Ein weiterer Nachteil ist, daß eine solche Montage nicht automatisiert werden kann, d.h. das Befestigen der Schrauben nicht von einem Roboter oder dergleichen übernommen werden kann.

Dies ist insbesondere von Nachteil in Verbindung mit der Montage von Kraftfahrzeugen. Darüber hinaus sind Schwierigkeiten gegeben, wenn bei engen Raumverhältnisen ein Festziehen erfolgen muß, weil beispielsweise einer der Flansche eng an einen Getriebeausgang angeschlossen ist. Es besteht dabei die Gefahr, daß kein exaktes Anziehen erfolgt. Dies ist insbesondere dann gegeben, wenn eine Montage von Hand erfolgt. Darüber hinaus ist aufgrund der Anordnung der Schrauben von Nachteil, daß sich die Anpreßkraft auf die der Bohrung unmittelbar benachbarten Zähne begrenzt verteilt. Die über das Dehnverhalten der Verbindungsschrauben erzielbare Vorspannung ist begrenzt.

Ferner ist eine Gelenkausbildung aus der GB-A-2189868 bekannt, bei der zwei der vier Zapfen eines zu einem Kreuzgelenk gehörenden Zapfenkreuzes sogenannte Flügelbuchsen zugeordnet sind, die einzeln an einem Mitnehmer verschraubt sind. Zur verbesserten Drehmomentübertragung sind verzahnte Flächen an den Flügeln der Flügelbuchse und den gegenüberliegenden Befestigungsflächen des Mitnehmers vorhanden. Zur Befestigung sind die Flügel mit Durchgangsbohrungen und die Mitnehmer mit Gewindebohrungen für die Befestigungsschrauben versehen. Bei einer solchen Verbindung sind andere Anzugs- und Vorspannungsverhältnisse gegeben, als bei einer Flanschverbindung.

Aus der DE-A-3210389 ist eine Flanschverbindung bekannt, bei der die gegeneinander verspannbaren Flächen mit Oberflächenaufwerfungen versehen sind, die beim gegenseitigen Vorspannen durch Schraubverbindungen sich in die jeweilige Gegenfläche eindrücken sollen. Hierdurch soll ein verdrehsicheres Verspannen bei verringertem Materialaufwand erreicht werden. Die Lehre dieses Standes der Technik beschränkt sich somit auf die Verbesserung der Verbindung durch ein verzahntes Ineinandergreifen der aneinanderliegenden Flanschflächen.

Ausgehend hiervon liegt der Erfindung die Aufgabe zugrunde, eine Scheibenkupplung zu schaffen, die bei gleichem axialen Bauraum wie die bekannten Scheibenkupplungen, eine vereinfachte und sichere Montage erlaubt, wobei eine erhöhte Dauerfestigkeit der Verbindung unter Vorspannung bei verbesserter Verteilung der Anpreßkräfte auf die Verzahnung erreicht wird.

Diese Aufgabe wird erfindungsgemäß dadurch gelöst, daß der andere Flansch auf seiner den Verzahnungsabschnitten abgewandten Radialfläche mit axial vorspringenden Nocken versehen ist, in denen jeweils für eine Verbindungsschraube eine Gewindebohrung angeordnet ist, die sich an einen Bohrungsabsatz, der von der verzahnten Kuppelfläche ausgeht und dessen Bohrungsdurchmesser größer ist, als der Außendurchmesser der Verbindungsschrauben, anschließt, daß die Kuppelfläche mindestens einer der Flansche im Querschnitt, insbesondere im Bereich der Verzahnungsabschnitte, konkav verlaufend ausgebildet ist und daß sich beidseitig an die Nocken Rippen anschließen, die sich über die Verzahnungsabschnitte erstrecken.

Von Vorteil bei dieser Ausbildung ist, daß mit nur einem Werkzeug die Verbindung hergestellt werden kann, da auf Muttern verzichtet wird. Auf der anderen Seite wird durch die Nocken in Verbindung mit den angrenzenden Rippen eine Versteifung des Flansches erreicht, so daß sich im Befestigungsbereich die Verspannkräfte besser auf die Verzahnung verteilen. Die Wölbung wird bei der Verschraubung durch Verformung elastisch aufgehoben und erhöht die Vorspannung. Damit erhöht sich die Dauerfestigkeit der Verbindung.

Schließlich wird aufgrund des Bohrungsabsatzes erreicht, daß genügend Schaftlänge für die Verbindungsschrauben zur Verfügung steht, um die Vorspannung zu begünstigen. Diese Bohrungsabsätze sorgen außerdem dafür, daß ein zielgerichtetes Einfädeln der Schrauben in Richtung auf die Gewindebohrung erfolgen kann, ohne daß das Gewinde der Gewindebohrungen beschädigt werde, könnte. Aufgrund der besonderen Anordnung der Nocken in Verbindung mit den Rippen ist es außerdem möglich, für den Flansch ein billigeres Material zu verwenden, beispielsweise Temperguß. Neben der Vereinfachung einer Handmontage ergibt sich auch eine

2

Vereinfachung für eine automatisierte Montage, da die Werkzeuge nur von einer Seite zuzuführen sind.

In weiterer Ausgestaltung der Erfindung ist vorgesehen, daß die Rippen sich rechtwinkelig zum Verlauf der Zähne des verzahnten Abschnittes erstrecken. Dabei können die Rippen ausgehend von den Nocken, entweder mit abnehmender axialer Stärke oder im wesentlichen gleichbleibender axialer Stärke ausgebildet sein, wobei sie zu den Enden hin in die Radialfläche auslaufen. Über die axiale Stärke sowie die Breite der Rippen läßt sich die gewünschte Verformung und damit Verteilung der Anpreßkräfte auf die Verzahnungen wählbar gestalten, um ein Setzen der Schraubenverbindung durch plastische Verformung und zeitabhängiges Fließen der Zahnflanken der Verzahnungsabschnitte oder Mikrobewegungen bei zu schwacher Pressung in einzelnen Bereichen und damit verbundenen Passungsrost zu vermeiden.

Nach einem weiteren Merkmal der Erfindung ist vorgesehen, daß der Nocken zu seiner Endfläche hin mit mindestens einer Ausnehmung versehen ist. Hierdurch wird eine Schwächung des Bereiches erzielt, und durch eine gezielte Verformung, beispielsweise durch Verstemmen, ist es möglich, daß die Verbindungschraube im montierten Zustand zusätzlich gesichert ist.

Bevorzugt sind die Zähne der verzahnten Abschnitte im Querschnitt trapezförmig und selbsthemmend ausgebildet. Der Neigungswinkel ihrer Flanken ist also so gestaltet, daß keine Axialkräfte aus der Drehmomentübertragung resultieren.

Besonders deutlich werden die Vorteile beim Einsak der erfindungsgemäßen Scheibenkupplung bei Kraftfawzeuggelenkvellen, da dart besonders enge Bauverhältnisse vorhanden sind, so daß eine nur schlechte Zugänglichkeit für Werkzeuge gegeben ist und sich in der Montage die Notwendigkeit zur Automatisierung bzw. zur vereinfachung ergibt.

Ein bevorzugtes Ausführungsbeispiel der Erfindung ist in der Zeichnung schematisch dargestellt.

Es zeigt

Figur 1    einen Längsschnitt durch die Scheibenkupplung als Teil eines Antriebsstranges eines Kraftfahrzeuges

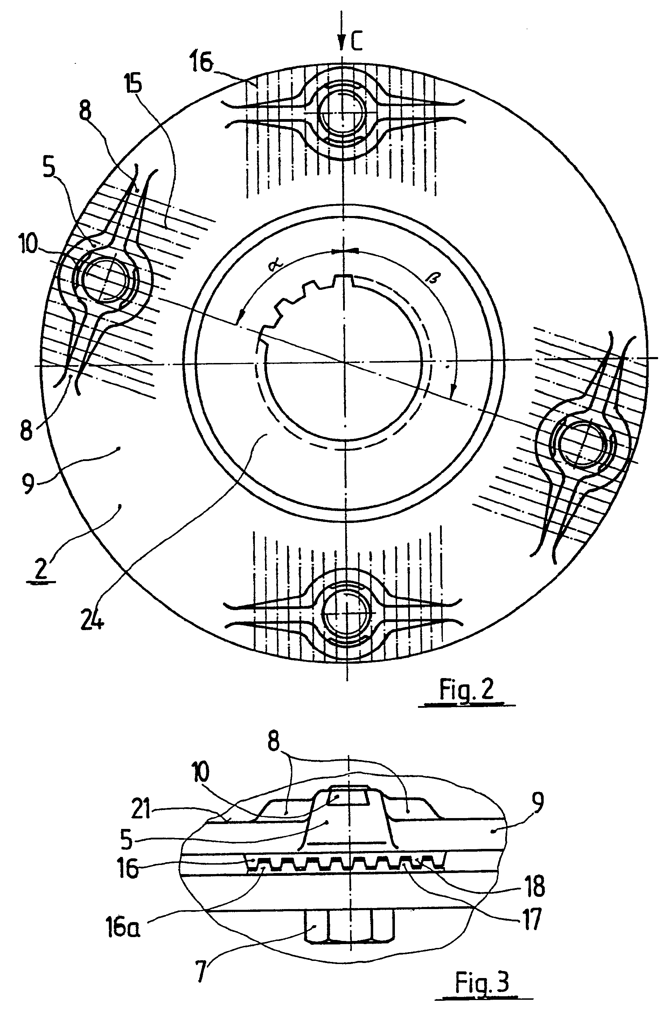

Figur 2    eine Seitenansicht auf den Nabenmitnehmer als Einzelheit mit Nocken und

Figur 3    eine Ansicht auf ein Detail in Pfeilrichtung C gemäß Figur 2.

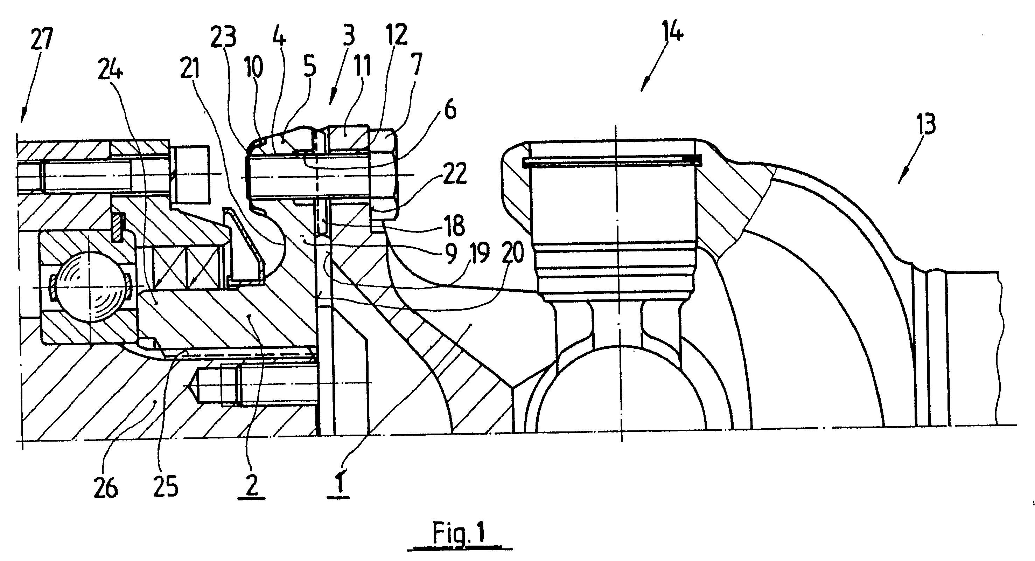

In Figur 1 ist die Scheibenkupplung 3 als Bestandteil eines Teils eines Antriebsstranges eines Kraftfahrzeuges dargestellt. Die Scheibenkupplung 3 besteht aus einem ersten Kupplungsteil 1, welches als Flanschgabel ausgebildet ist und zu einem Kreuzgelenk 14 einer Kreuzgelenkwelle 13 gehört, und einem zweiten Kupplungsteil 2, welches als Nabenmitnehmer ausgebildet ist, dessen Nabe 24 auf dem Getriebezapfen 26 eines Fahrzeuggetriebes 27 mit seiner verzahnten Aufsteckbohrung 25 aufgesteckt ist.

Das erste Kupplungsteil 1, welches als Flanschgabel ausgebildet ist, besitzt einen Flansch 11, der in seiner Kuppelfläche 19 mit Verzahnungsabschnitten 15a, 16a, versehen ist. Die Verzahnungsabschnitte 15a, 16a weisen jeweils eine Mehrzahl von parallel zueinander sich erstreckenden Zähnen 17 auf, die trapezförmig ausgebildet sind. Jeweils zwei Verzahnungsabschnitte 15a bzw. 16a sind durch Räumen herstellbar. Im mittleren Bereich eine jeden Verzahnungsabschnittes 15a bzw. 16b ist im Flansch 11 eine Durchgangsbohrung 12 angeordnet, durch die eine Verbindungsschraube 7 hindurchführbar ist. Die Verbindungsschraube 7 liegt mit ihrem Kopf an einer Planfläche 22 an. Der Nabenmitnehmer 2, der das zweite Kupplungsteil bildet, besteht aus der mit einer verzahnten Aufsteckbohrung 25 versehenen Nabe 24 und dem sich radial dazu erstrekenden Flansch 9. Der Flansch 9 weist auf seiner Kuppelfläche 20 zu den Verzahnungsabschnitten 15a, 16a der Kuppelfläche 19 des Flansches 11 entsprechend angeordnete Verzahnungsabschnitte 15, 16 auf. Die Verzahnungsabschnitte 15, 16 besitzen ebenfalls trapezförmige Zähne 18. Die einander gegenüberliegenden Abschnitte der beiden Flansche 9 und 11 greifen mit ihren Zähnen 17 und 18 ineinander und bewirken hierdurch eine drehmomentmäßige Verbindung. Im etwa mittleren Bereich der verzahnten Abschnitte 15 und 16 des Flansches 9 sind von der Radialfläche 21, die der Kuppelfläche 20 abgewandt ist, Nocken 5 angebracht. Die Nokken 5 sind korrespondierend zu den Durchgangsbohrungen 12, ausgehend von ihrer verzahnten Kuppelfläche 20, mit einem Bohrungsabsatz 6 versehen, welcher einen Durchmesser aufweist, der größer ist, als der Außendurchmesser des mit Gewinde versehenen Schaftteiles der Verbindungsschrauben 7. Die axiale Länge des Bohrungsabsatzes 6 ist so bemessen, daß insgesamt eine genügende freie Schaftlänge der Verbindungsschrauben 7 zur Erzielung der benötigten Vorspannung gegeben ist. An den Bohrungsabsatz 6 schließt sich die Gewindebohrung 4, in die die Verbindungsschraube 7 mit ihrem Gewindeschaft eingeschraubt wird, an.

Die federnde Vorspannung wird durch eine gezielte konkave Formgebung eines der beiden Flansche 9, 11, zumindest im Bereich der miteinander in Eingriff befindlichen Bereiche, insbesondere der Verzahnungsabschnitte 15, 16 unterstützt. Es muß zur Verspannung zunächst eine Formänderung der Flansche 9, 11 bis zur Aufhebung der Wölbund stattfinden.

Beidseitig der Nocken 5 sind Verstärkungsrippen 8 angeschlosen, die sich über die Breite der Verzahnungsabschnitte 15 bzw. 16 erstrecken und zu einer Versteifung und damit zu einer besseren Verteilung der Axialkraft der Schrauben in den Verzahnungsabschnitten führen.

Zu ihrer Endfläche 23 hin weisen die Nocken 5 Ausnehmungen 10 auf. Die Ausnehmungen 10 dienen dazu, eine Verringerung des Nockenquerschnittes zu erzielen, um die Nocken 5 in diesem Bereich durch Verstemmen deformieren zu können und bei vollendeter Montage eine Verklemmung der Verbindungsschrauben 7 in der Gewindebohrung 4 zu erreichen. Dadurch wird eine zusätzliche Sicherung erreicht. Der Bohrungsabsatz 6 dient zusätzlich auch noch einer vereinfachten Einführung der Verbindungsschrauben 7 mit ihrem Gewindeschaft, die gewährleistet, daß das Gewinde der Gewindebohrung 4 nicht beschädigt wird.

Wie aus der Zeichnungsfigur 1 ersichtlich ist, sind aufgrund der Anordnung des Nabenmitnehmers 2 eng an den Getriebeausgang des Fahrzeuggetriebes 27 begrenzte Platzverhältnisse gegeben. Dadurch, daß eine Verschraubung und eine Zugänglichkeit mit Werkzeugen nur von der Flanschseite des Flanschmitnehmers 1 des Kreuzgelenkes 14 her erforderlich ist, ist eine vereinfachte Montage möglich.

Die Verzahnungabschnitte 15 und 16 bzw. 15a und 16a, weisen ungleiche Umfangsabstandswinkel α und β auf, die darüber hinaus noch die Verbindungsschrauben 7 in solche Bereiche der Flanschgabel 1 verlegen, die besser zugänglich sind. Darüber hinaus wird auch hierdurch eine Montage in nur einer bestimmten Stellung bzw. in zwei um 180° zueinander versetzten Stellungen erreicht.

## Patentansprüche

1. Scheibenkupplung, insbesondere für Kreuzgelenkwellen für Kraftfahrzeuge, bestehend aus einem ersten und einem zweiten Kupplungsteil mit zwei radial sich erstreckenden Flanschen, die über Verzahnungen ihrer aneinander anliegenden Kuppelflächen und über im Bereich der Verzahnungen angeordnete Verbindungsschrauben miteinander lösbar verbunden sind, wobei einer der Flansche mit Durchgangsbohrungen für die Verbindungsschrauben versehen ist, dadurch gekennzeichnet, daß der andere Flansch (9) auf seiner den Verzahnungsabschnitten (15, 16) abgewandten Radialfläche (21) mit axial vorspringenden Nocken (5) versehen ist, in denen jeweils für eine Verbindungsschraube (7) eine Gewindebohrung (4) angeordnet ist, die sich an einen Bohrungsabsatz (6), der von der verzahnten Kuppelfläche (20) ausgeht und dessen Bohrungsdurchmesser größer ist als der Außendurchmesser der Verbindungsschraube (7), anschließt, daß die Kuppelfläche mindestens eines der Flansche (9) im Querschnitt, insbesondere im Bereich der Verzahnungsabschnitte (15, 15a, 16, 16a), konkav verlaufend ausgebildet ist und daß sich beidseitig an die Nocken (5) Rippen (8) anschließen, die sich über die Verzahnungsabschnitte (15, 16) erstrecken.

2. Scheibenkupplung nach Anspruch 1, dadurch gekennzeichnet, daß die Rippen (8) sich rechtwinkling zum Verlauf der Zähne (18) der Verzahnungsabschnitte (15, 16) erstrecken.

3. Scheibenkupplung nach Anspruch 1, dadurch gekennzeichnet, daß die Rippen (8) ausgehend von den Nocken (5) mit abnehmender axialer Stärke in der Radialfläche (21) auslaufen.

4. Scheibenkupplung nach Anspruch 1, dadurch gekennzeichnet, daß der Nocken (5) zu seiner Endfläche (23) hin mit mindestens einer Ausnehmung (10) versehen ist.

5. Scheibenkupplung nach Anspruch 1, dadurch gekennzeichnet, daß die Zähne (17) der Verzahnungsabschnitte (15, 15a, 16, 16a) im Querschnitt trapezförmig und selbsthemmend ausgebildet sind.

## Claims

1. A disc coupling, especially for a motor vehicle shaft with universal joints, consisting of a first and a second coupling part having two radially extending flanges which are movably connected to each other via the teeth of their coupling faces contacting each other and via connecting bolts arranges in the region of the teeth, with one of the flanges being provided with through-bores for the connecting bolts, characterised in that the other flange (9), on its radial face (21) facing away from the toothed portions (15, 16) is provided with axially projecting bosses (5) each containing a threaded bore (4) for a connecting bolt (7), which threaded bore (4) adjoins a bored relied (6) which starts from the toothed coupling face (20) and whose bore diameter is greater than the outer diameter of the connecting bolt (7) ; that the cross-section of the coupling face of at least one of the flanges (9), especially in the region of the toothed portions (15, 15a, 16, 16a) is designed to be concave ; and that on both sides, the bosses (5) are followed by ribs (8) extending across the toothed portions (15, 16).

2. A disc coupling according to claim 1, characterised in that the ribs (8) extend at right angles relative to the teeth (18) of the toothed portions (15, 16).

3. A disc coupling according to claim 1, characterised in that the ribs (8) starting from the bosses (5) run out in the radial face (21) while their axial thickness decreases.

4. A disc coupling according to claim 1, characterised in that towards its end face (23) the boss (5) is provided with at least one recess (10).

5. A disc coupling according to claim 1, characterised in that the cross-section of the teeth (17) of the toothed portions (15, 15a, 16, 16a) is designed to be trapezoidal and self-inhibiting.

## Revendications

1. Accouplement à disque, en particulier pour arbres de transmission à joint de cardan pour véhicules automobiles, consistant en un premier et en un second demi-accouplement avec deux plateaux qui s'étendent radialement et qui sont réunis l'un à l'autre de manière amovible par des dentures de leurs surfaces d'accouplement disposées l'une contre l'autre et par des vis de liaison disposées dans le domaine des dentures, l'un des plateaux étant muni d'alésages traversants pour les vis de liaison, caractérisé en ce que l'autre plateau (9) est muni sur sa surface radiale (21) opposée aux sections de denture (15, 16) de saillies (5) qui se projettent axialement, dans chacune desquelles est disposé un alésage fileté (4) pour une vis de liaison (7), qui est contigu à un retrait d'alésage (6) qui part de la surface d'accouplement dentée (20) et dont le diamètre d'alésage est supérieur au diamètre externe de la vis de liaison (7), en ce que la surface d'accouplement d'au moins l'une des saillies (9) s'étend de manière concave en section transversale, en particulier dans le domaine des sections de denture (15, 15a, 16, 16a) et en ce que des deux côtés des saillies (5) se raccordent des nervures (8) qui s'étendent sur les sections de denture (15, 16).

2. Accouplement à disque selon la revendication 1, caractérisé en ce que les nervures (8) s'étendent à angle droit par rapport à l'orientation des dents (18) des sections de denture (15, 16).

3. Accouplement à disque selon la revendication 1, caractérisé en ce que les nervures (8) s'étendent dans la surface radiale (21) en une épaisseur axiale décroissante à partir des saillies (5).

4. Accouplement à disque selon la revendication 1, caractérisé en ce que la saillie (5) est munie en direction de sa surface extrême (23) d'au moins un évidement (10).

5. Accouplement à disque selon la revendication 1, caractérisé en ce que les dents (17) des sections de denture (15, 15a, 16, 16a) sont de section transversale trapézoïdale et sont autobloquantes.

EP 0 315 922 B1

Fig. 1

Fig. 2

Fig. 3